# EUROPEAN PATENT SPECIFICATION

(11) **EP 3 155 050 B1**
(45) Date of publication and mention of the grant of the patent: **09.09.2020**
(21) Application number: 14893911.9
(22) Date of filing: 06.06.2014
(51) Int. Cl.: C09D 5/00, A61K 8/02, A01N 25/34, B41M 3/00, A61Q 13/00, A23F 3/40, A23F 5/46, C09D 11/03, C11B 9/00, C08L 1/28, D06M 15/09, D21H 19/34, A23L 27/00

(54) **MASS CONTAINING FUNCTIONAL COMPOUND AND VISCOSITY REGULATOR**
MASSE MIT FUNKTIONELLER VERBINDUNG UND VISKOSITÄTSREGLER
MASSE CONTENANT UN COMPOSÉ FONCTIONNEL ET UN RÉGULATEUR DE VISCOSITÉ

(43) Date of publication of application: 19.04.2017
(60) Divisional application: 20182292.1
(73) Proprietor: Opes Corporation OY, 00101 Helsinki (FI)
(72) Inventor: JÄRVENPÄÄ, Janne, 02880 Veikkola (FI)
(74) Representative: Boco IP Oy Ab
(86) International application number: PCT/FI2014/050457
(87) International publication number: WO 2015/185790

(56) References cited:
- EP-A1- 1 457 522
- EP-A2- 2 046 264
- WO-A1-01/01958
- WO-A1-01/01958
- WO-A1-2005/018323
- WO-A1-2009/029184
- WO-A1-2012/083269
- WO-A1-2014/198999
- WO-A1-2014/198999
- WO-A2-2008/047347
- WO-A2-2008/047347
- JP-A- 2006 232 789
- JP-A- 2013 173 724
- JP-A- 2013 173 724
- US-A- 4 236 532
- US-A- 4 236 532
- US-A- 5 093 182
- US-A- 5 093 182
- US-A1- 2004 247 649
- US-A1- 2005 016 556

## Description

### Technical background

The invention relates to a functional compound-comprising product as well as to a 5 method of manufacturing a functional compound-comprising product.

Products have been traditionally supplemented with functional compounds by dosing the same directly into a base material or e.g. by spraying a printed product or textiles with aroma compounds. A problem with prior known technologies is that the dosage of an aroma compound is either a laborious and expensive process or the methods do not enable the dosage of an aroma compound in sufficiently large amounts to the printed product. Also known is a method, wherein an aroma compound is added to a product in the form of an added ingredient in printing ink, lacquer and/or adhesive. In the methods, the regulated release of a scent requires either activation of the product or placement/removal of a separate protective film.

WO2009/029184 discloses a method for manufacturing a functional compound comprising product which is a fragrance emitting food product, method comprising providing a mass comprising a functional compound comprising at least one flavor, a solvent comprising implicitly ethanol , a silicat as viscosity modifier and a film forming matrix comprising ethyl cellulose and coating the mass onto or deposited into a containment device which can be porous paper or textiles. WO2009/029184 does not disclose a film former in the matrix having a content less than 2% by weight.

### General description of the invention

What has been discovered now is a mass comprising functional compound, which mass in technical sense is exceptionally beneficial in terms of dosing and releasing the functional compound. The invention relates also to a method for the manufacture of a functional compound-comprising product. In order to attain this objective, the invention is characterized by features presented in the independent claims. A few preferred embodiments of the invention have been presented in other claims.

The functional compound-comprising product according to the invention is characterized in that said product comprises a mass provided with a functional compound that comprises at least one flavour, a solvent comprising ethanol, wherein the solvent is capable of dissolving the functional compound, a viscosity regulator comprising a silicate, and a carrier matrix having a film former comprising ethyl cellulose, the said product further comprising an absorbent base material comprising paper or textile, wherein the mass has been printed or dosed on the base material and forms a permeable film thereon, and wherein the film former in the matrix has a content of less than 2% by weight. This facilitates a diverse use of the invention as the mass is now useful also in applications which require a certain viscosity for dosing the mass and a functional compound to be added. The viscosity regulator is a silicate compound. The silicate compound changes the product's viscosity and, moreover, may bond an aroma compound more effectively to the solution. The silicate compound may vary according to intended use.

According to one aspect of the invention, the mass/product is of food grade quality. This enables a much more diversified use of the mass/product and makes it safe in many aspects.

According to one aspect of the invention, the mass has been provided, as a carrier, with water. In case the flavor raw material is water-based and hence miscible with water, the water is beneficial and eco-friendly and more food grade than many other alternative carriers. Applications may include e.g. almost all products possibly capable of being flavored with this technology. One advantageous application is the flavoring of regular water to make juice. According to one aspect of the invention, the mass has been provided, as a carrier, with at least one fat/oil, such as preferably an ethereal oil. This carrier has often a benefit of a more rapid transit of the functional compound to the destination. By virtue of oil, e.g. the flavor remains in the flavored item for a longer time. Applications may include all sorts of flavoring, wherein the flavor is desired to pass as rapidly as possible into an item to be flavored and, at the same time, the flavor is desired to have durability as long as possible. The mass has been provided, as a carrier, with a solvent capable of dissolving the functional compound. Some of the flavor raw materials may require a solvent as a carrier for enabling the flavor to dissolve as effectively as possible. In this context, the solvent refers to all solvents other than water, fat, and oil.

The mass has been provided, as a carrier, with a matrix comprising at least one film former. According to one aspect of the invention, the functional compound can also be fine-tuned in terms of its nature by means of the thickness and characteristics of a film. The matrix can be used without explicit activation for a desired period of time. Accordingly, it has highly wide-range and meaningful applications and opportunities of implementation. According to one aspect of the invention, the matrix has been provided with at least one functional compound, at least one solvent capable of dissolving the functional compound, as well as with at least one film former, whereby the solvent capable of dissolving the functional compound is also capable of homogenizing the film former within the matrix.

In technical sense, the matrix provides a particularly beneficial means of dosing and releasing a functional compound. The matrix according to the invention makes it possible for functional compounds, such as flavors, a flavor suppressor, a flavor enhancer, fragrances, a fragrance enhancer to be dissolved as well as dosed, and to be evaporated from various substrates and products in a manner controlled by means of a film. Such a matrix can be blended with a wide variety of different compounds. The release of a functional compound can be controlled and regulated by adjusting the thickness and characteristics of a film formed by means of the matrix.

The matrix can be used as such for the dosage of a functional compound, or it can be used for the manufacture of a specific product by printing or some other type of dosing. The drying matrix and/or the product can be preferably formed with a permeable film for decelerating the diffusion rate of a functional compound and for releasing the same over an extended period of time in comparison with a filmless product. The matrix/product can be preferably used as a fragrant product, a scent regulator/suppressor, a repellent, an attractor, and/or a pesticide. The matrix, even in itself, can also be used for preventing or regulating the evaporation of functional compounds. The product can be further provided with a protector, such as a plastic film or a paraffin film, for further regulating the release of a functional product.

The content of a film former in the produced matrix is less than 2%, such as preferably less than 1%. In this case, the product's properties lend themselves particularly well to the dosage of a functional compound, or it can be used for the manufacture of a specific product by printing or some other type of dosing. Advantageously, the mass then comprises at least one solvent capable of dissolving a functional compound, as one film former, in which case the solvent capable of dissolving the functional compound is also capable of homogenizing the film former within the matrix.

The film former consists of ethylcellulose. It forms a stable lasting film, which is clear, UV stable or non-yellowing, highly temperature resistant -70°C to 150°C (silk screen printing 60°C and textile printing 140°C), economical and safe to use. Ethylcellulose in itself does not dissolve in water but, by means of a solvent, such as ethanol, its incorporation therein can also be managed. The solvent comprises ethanol. Preferably, the ethanol is as water-free as possible or totally water-free. Alcohols make good solvents for a wide variety of compounds. Ethanol is safe to use as it provides a nontoxic matrix. In itself, it is quite odorless and its evaporation is technically easy. The desired function compound determines the selection of a specific solvent/solvents and film formers. Certain solvents/film formers can be used with quite a variety of different compounds.

Preferably, the mass has been provided with at least one carrier, which has been evaporated away after the functional compound has been dissolved.

A product of the invention is printed or otherwise dosed with any type of mass according to the invention. According to one aspect of the invention, the product's base material is a foodstuff or a base material which is classified as a foodstuff or which is food grade, such as pulp, pellet or slab or chip, such as a strip, cardboard, a cylinder, a package, a preservation container, a protector, a substrate sheet or the like base material. According to one aspect of the invention, the product's base material is a base material capable of dissolving or suspending or dispersing in use, such as a strip of cardboard which disperses in water or a mass of foodstuff/slab of sugar which dissolves in water. The product's base material may have been selected e.g. from a group, comprising paper, board, cardboard, a wood product, plastic, rubber, metal, glass, a ceramic product, textile. According to one aspect of the invention, the product is a fibrous product, such as preferably a textile article. The method lends itself particularly well e.g. to the printing of textiles. According to one aspect of the invention, the product's base material is further printed, by some other printing technique, with at least one printing ink, adhesive and/or lacquer. Hence, the method can be utilized for highly diversified applications.

A product manufactured with the method provides a particular advantage over the prior art in the sense of enabling the amount of compound in the product to be regulated easily and precisely. The release of a functional compound can be regulated. For example, it is possible to manufacture e.g. a product, wherein the scent is pressed by screen printing technique in printing inks followed by coating it with a partially breathable lacquer. Hence, the scent releases from the product for a long time. Respectively, the scent can be printed in the product by being incorporated in the surface lacquer, in which case it releases proportionally faster and in higher concentrations.

The mass is provided, as a functional compound, with at least one flavor, a flavor suppressor and/or a flavor enhancer. It is also possible e.g. to simultaneously enhance one flavor and suppress some other flavor; to add one flavor and suppress another flavor; to add one flavor and enhance another flavor.

The flavor may have been selected e.g. from a group, comprising:
- coffee
- chocolate
- cocoa
- cloves
- apple
- lemon
- orange
- vanilla
- menthol
- mint
- peppermint
- bergamot
- cherry
- strawberry
- pineapple
- rosemary
- garlic
- chili

Any type of berry, fruit, herb, spice or some other food grade plant or blends of the above or compounds otherwise approved as foodstuffs e.g. in legislation are suitable also for applications.

The mass can be provided, as a functional compound, with at least one, a scent, a scent suppressor, a scent enhancer, a repellent, an attractor, or a pesticide. Such applications can be used e.g. in the handling of products, research projects, or in fishing/hunting, or e.g. in repelling or attracting insects or rodents. It is also possible to combine an attractor and a pesticide in a single product. It is also possible to make a product, which at the same time repels certain animals and attracts others.

The mass can be provided, as a functional compound, with at least one, a scent, a scent suppressor, a scent enhancer, a repellent, an attractor, or a pesticide. The scent can be highly diversified. The desired scent determines the selection of a specific solvent/solvents and film formers. Certain solvents/film formers can be used with quite a wide range of compounds. The scent has been allergy tested and/or is of the type that does not cause allergy, excessively sensitize, photosensitize or generally irritate those exposed to its activity. Thus, the use of such products is particularly safe in a wide range of applications. The scent may preferably be also of a type suitable for use as a foodstuff.

The scent can be any substance, compound or mixture, which delivers at least some sort of perceivable or measurable smell. It may comprise just one such substance, mixture or compound, or it can comprise two or more substances, compounds and/or mixtures in various ratios. The scent can also be e.g. a plant or a part thereof, which comprises one or more scent-producing substances, compounds or mixtures. The scent can also be e.g. a plant extract. In this application, the specific scent refers to such a compound which is the main or at least a partial source of this particular scent. However, such a specific scent may vary, e.g. the scent of an apple can be the scent of a sour apple or the scent of a sweet apple, and e.g. the scent of bread may vary over quite a wide range.

The scent can comprise one or more aromatic organic compounds. These diversify applications even further. These enable the provision of e.g. scent combinations, which otherwise would have to be made at a fragrance raw material level. For example, by combining the smell of raw tobacco with the scent of vanilla there is provided a combination resembling the vanilla flavored cigar. The scent can comprise one or more inorganic aromatic compounds. These diversify applications of the invention even further.

There can be included one or more aroma compounds selected from a group, comprising:
- the scent of some tar product, such as the scent of tar piss or pit tar
- the scent of some smoke, such as the scent of a smoke sauna or tar smoke
- the scent of some beverage, such as the scent of coffee, cocoa, tea, alcohol free mead, wine, or beer
- some scent of a plant, such as the scent of mint or birch
- the scent of some spice, such as the scent of garlic, black pepper, or white pepper
- the scent of some fruit, such as the scent of apple
- some scent of a flower, such as the scent of rose or lily of the valley
- the scent of some foodstuff, such as the scent of bread, bun, cured meat, or smoked fish
- the scent of some animal, such as the scent of a horse
- some scent of a berry, such as the scent of raspberry

According to one aspect of the invention, the mass contained in a functional compound-comprising product is printed on or otherwise dosed to a product with a method which is selected from a group, comprising: offset technique. screen printing technique, flexo printing, ink jet/digital printing technique, pad printing, rotogravure printing, relief printing, rotation printing, manufacturing a spray, manufacturing an aerosol, dipping.

The mass has been provided with at least one printing substance. According to one aspect of the invention, the mass has been provided with at least one food grade printing substance. The inclusion of a printing substance enables the printing of a functional compound/matrix on products. The product may come in quite a variety of forms. It can be e.g. a product, which is employed in an initial treatment of the product or even in a finishing treatment of the product, or it can be employed in hybrid printing technique. The dosage of a compound can be made remarkably precise, and progression of the process, both in terms of the aroma compound and otherwise, can be adjusted according to current needs. Printing on a product is an easy and technically simple solution. Printing does not require separate equipment while obtaining the very significant benefits offered by printing technology generally in printing. Hence, the addition of compound/compounds is technically highly efficient. At the same time, it is also makes very good economic sense. The method can be used for manufacturing e.g. shirts, which are then subsequently printed e.g. with a desired pattern or color. This new method provides thereby a substantial advantage over prior known techniques in that respect, as well. The manufacture product, which comprises an aroma compound, can be used e.g. as a product included in a group, comprising: a fibrous product, such as textile, cloth, felt, cotton, textile, accessory, sweatband, wristband, garment, pants, shirt, baseball cap, knit cap, headwear, bag, pouch, beer coaster, cardboard cutout, display stand, storage drawer, display case, brochure and glossary, binder, folder, mobile, table stand, floor stand, flip-flop rack, product package, packing material, enclosure, box, leaflet, calendar, ruler, display, container, dispenser, glass coaster, calling card, glossary, form, backdrop advertisement, product card, tablecloth, table speaker, case or other tool or product designed for sales promotion, marketing, direct mailing. The product can be a semi-finished article or a preparation and it can be intended e.g. for sales and marketing and also for the consumer.

The at least one printing substance consists of lacquer selected from a group, comprising: solvent lacquer, protection lacquer, colorless lacquer, transparent lacquer, covering lacquer, colored lacquer, printing lacquer, paper lacquer, textile lacquer, offset lacquer, dispersion lacquer, UV lacquer. The use of lacquer as a printing substance is particularly beneficial by providing technically and economically a means of including a functional compound/matrix in a wide variety of different products. The at least one printing substance consists of printing ink or adhesive. This further diversifies the means of adding a functional compound/matrix by making a difference also in the sense of how vigorously and for how long the functional compound releases. According to one aspect of the invention, the at least one printing substance is a solvent-based, water-based and/or resin-based printing substance for digital printing. This is a highly important application by enabling the addition of functional compounds, such as scents, in an important sector of printing technology.

According to one aspect of the present disclosure, the mass has been provided with at least one carrier, such as a spray gas or aerosol carrier. The carrier enables the dosage of a functional compound/matrix without printing technology e.g. into textiles or cardboards. It can also be used for repeating the desired treatment at fixed times, e.g. at intervals of 1-2 months.

According to one aspect of the present disclosure the carrier has been evaporated away from the mass/product. The evaporation can be conducted either passively or actively. Hence, the matrix develops a film which regulates the release of a functional compound without separate activation. According to one aspect of the present disclosure, the product is oven-treated. This speeds up evaporation/drying and manufacturing in general. In addition, it improves handling characteristics of the product. The oven treatment is not appropriate for all functional groups.

The matrix can further include as a binder, a surfactant for mixing and bonding together with the carrier. The surfactant is preferably an anionic surface active agent. Advantageously, the surfactant comprises SDS (sodium lauryl sulfate). The content of SDS can be e.g. 0.5 to 2% (w/v), such as preferably more than 0.8% (w/v) or more than 1 % (w/v).

The matrix can be supplemented with accelerators for an enhanced bonding of the aroma compound. This is for ensuring and adjusting and enhancing the method to become optimal.

The product printed with a printing technique, or the product having a compound otherwise dosed therein, can be further printed with embossed characters, recesses and holes, such as embossed characters with Braille technique or other suchlike technique. Preferably provided thereby are combinations for use e.g. by blind or visually impaired people. It can also be preferably utilized in applications which involve handling the product e.g. in semi-darkness.

According to one aspect of the present disclosure, at least one ink is selected from a group, comprising paper inks, plastic inks, textile inks, UV inks. The paper inks can be solvent and water based. It is also possible to use various gloss levels or e.g. matte or glossy surface inks. In addition to this, it is also possible to use a scratch ink which is used e.g. in raffle tickets, or a fluorescent ink which thus absorbs light and shines in the darkness, or light reflecting inks. This type of application can be utilized e.g. in propositions, wherein it is desirable to provide at the same time both a color attraction and a smell attraction, such as e.g. in the manufacture of coatings for fishing lures or e.g. in scented reflectors or in scented hunting vests with a purpose of masking the characteristic human scent which is shunned by animals.

As a rule, the plastic inks are all solvent based. It is possible, also in plastic inks, to use matte and glossy surface options. It is also possible to use e.g. 2-component plastic inks for metal surfaces. As for plastic inks, it is also possible to use pigment and primer paste inks, which are used in the breaking of colors or as a primer.

Textile inks are generally categorized in plastisol-, 1- or 2-component-, as well as watercolor-based inks. Also useful are various masking inks, fluorescent inks, and thinners.

It is also possible to use ultraviolet light curable inks. These are similar to other inks but require ultraviolet light for drying the ink.

Color blending can be conducted in a printing house or else the printing house may order a specific tone ink directly from an ink supplier.

### Detailed description

### Formulation of aroma compounds for paper and textile lacquer

### Employed chemicals

P (lacquer): Aquacolor Gloss WB381 (Sericol)
Txt (lacquer): Texopaque OP00A (Sericol)
Emulsifiers:
   Sodium dodecyl sulfate SDS (Sigma)
Montanox 20 ja Montanox 80 (Seppic Food grade)
Amidet N (Kao)
Rheology modifiers:
   Aerosil 200 (Evonik)
Aerosil COK 84 (Evonik)
Sylothix 51 (JRS)
Scents:
   Parfum Coffeel Latte (Holland Aromatics)
Parfum Wild Strawberry (Holland Aromatics)
Parfum Apple (Holland Aromatics)
Film formers:
   Aqualon EC N10 (Hercules, pharm. grade)
Natrosol 250 HR (Ashland, pharm. grade)
Benecel A4C (Ashland, pharm. grade)

### Measuring equipment

Measuring devices, water baths and buffer solutions were calibrated and subjected to quality control:
- Brookfield Model DV-II+ Viscometer (dynamic)
- temperature controlled water bath Julabo
- pH meter Phenomenal VWR
- buffer solutions pH 4.7 and 11 AVS Titrinorm BDH Prolabo
- GC dual-column mass spectrometer headspace technique
- Agilent 5973 N MS-GC
- Purge&Trap Concentrator

Recipe (KA Aroma):
P -70 weight % P (paper lacquer)
-30 weight % mixture:
-90 weight % scent
-10 weight % SDS (20 weight % aqueous solution)

T -70 weight % T (textile lacquer)
-30 weight % scent

Results of initial testing:
- scents dissolved poorly in water and P-lacquer
- scents dissolved directly in lacquer, this test being conducted by using Sericol product family lacquers intended for both paper and textile.
- P contained solvents, including volatiles 10 weight % of which flammable 1-methoxy-2-propanol 10 weight % and water
- T contained slow evaporating solvents, including Xi-classified bis(2-ethylhexyl)maleate 20-25 weight % and a small amount of complexed Zn-aluminum chloride derivative of tall oil fatty acid as a catalyst
- it was noticed that different scents require different amounts of emulsifiers in order to emulsify in P-lacquer
- it was noticed that Tr lauryl version was not stable, but viscosity fluctuated 100 000 to 200 000 MPas (25°C)

For example with Latte scent the color of which could also be used for monitoring stability
Pr:
- 700 g P
- 250 g Latte
- 50 g (20 weight % SDS aqueous solution)
Tr:
- the preceding mixture, which was supplemented with 2 weight % Aerosil 200

Viscosities (mPas, 25°C):
- P-start 12 600
- Pr-mixture end 11 800
- T-start 16 800
- Tr-mixture 19 200
- Tr-mixture end 100 000-200 000
pH values:
- scents 6-7 slightly sour, creeping
- SDS 9,4
- P and T 7
- Pr 7
- Tr-mixture 5
- Latte + SDS 3,3-3,4 SDS to the bottom, gelatinous, reacts after a few days
- Strawberry + SDS 4,4
- Apple + SDS 4,9

### Emulsifiers

NDS is an anionic emulsifier. With that, and with protons releasing from the scents, the salt concentration increases affecting the solubility equilibrium. NDS was replaced with non-ionic emulsifiers. Testing was conducted on Polysorbate 20 (Montanox 20) and on even more oil-soluble Polysorbate 80 (Montanox 80), which, being liquid, are easy to use. Also tried was Amidet N (PEG-2 rapeseed oil amide derivative). All emulsifiers provided unstable emulsions, which depended on scents.

### Film formers

Selected as a film former were hydrocolloids, which were non-ionic and appropriate in other properties (protonation of scents), HEC (Natrosol 250 HR) which dissolves in water and HPMC (Benecol A4C) which dissolves in water and partially in solvents. These are in general use in pharmaceutical chemistry as releasers from matrix.
-Natrosol 250 HR (1 weight % aqueous solution) pH value 7.5
   viscosity 2 900 mPas (25°C)
-Benecel A4C (1 weight % aqueous solution) pH value 7.4
   viscosity 60 mPas (25°C)

### Rheology modifiers

As rheology modifiers, testing was conducted on Aerosil 200 (fumed silica), Aerosil COK 84 more stable in polar environment (fused mixture of quartz and aluminum), Sylothix 52 (consists of polyethylene fibers).

Mixtures Pr and Tr were made with a film former:
- Pr + 1 weight % Natrosol 250 HR viscosity 217 000 mPas and pH value 7
- Pr + 1 weight % Benecel A4C viscosity 120 000 mPas and pH value 7
- Tr + 1 weight % Benecel A4C + 2% Aerosil 200 viscosity 260 000 mPas and pH value 5
- Tr + 1 weight % Natrosol 250 HR viscosity 14 000 mPas and pH value 5

Results:
-> protonation rate of scents in water varies
->NDS as an anionic emulsifier a problem in terms of stability with various scents
->non-ionic emulsifiers Natrosol 250 HR and Benecel A4C
->Natrosol 250 HR and Benecel A4C dissolve in SDS aqueous solution-comprising Tr and the required amount of Aerosil 200 is halved
->Natrosol 250 HR and Benecel A4C viscosity of Pr solutions is excessive
->Scents cannot be emulsified for a stable mixture with and added to lacquers

Mixtures Ti were made without emulsifier (70/30 = T lacquer/Scent):
-210 g T
-90 g Latte

Initial viscosity of mixture 15 000 mPas
Ti + 2 weight % Aerosil (6 g) -> final viscosity 150 000 mPas
Ti + 3 weight % Aerosil (9 g)-> final viscosity 180 000 mPas
Ti + 1 weight % Natrosol 250 HR viscosity 18 000 mPas
Ti + 1 weight % Natrosol 250 HR + 3 weight % Aerosil 200 viscosity 120 000 -170 000 mPas (fluctuates)
Ti + 1 weight % Benecel A4C viscosity 17 000 mPas
Ti + 1 weight % Benecel A4C + 3 weight % Aerosil 200 viscosity 170 000 mPas

Results:
->Benecel A4C can be used as a film former without water emulsifier for textile lacquer

### Utilization of extraction technique

A solvent is needed, which totally dissolves scents both in water and solvent phases
- solvent must be generally available, economical and safe (toxicology known)
- solvent must be "odorless"
- solvent must evaporate from the matrix
- solvent must keep the film former homogeneous in solution
- evaporation of solvent must produce a permeable film structure
- film former must be soluble in the film former
- film former must be generally available, economical and safe (toxicology known)

Testing was conducted on both straight-chain and branched-chain alcohol.

There was prepared a homogeneous solution Pf:
- 68,3 weight % P
- 22,9 weight % Scent
- 8,2 weight % *Ethanol (Industol)
- 0,61 weight % N10PH
- Useful as alcohol is also the purer A12 grade (more odorless; bitter ingredient different). Branched-chain alcohol also functions (e.g. 2-propanol), but it has a more pungent smell and is needed three times more.
- Ethylcellulose (N10PH) does not dissolve in water, but it can be placed therein by means of alcohol. It produces a stable permanent film, which is clear, UV stable or non-yellowing, temperature-resistant -70°C to 150°C (silk screen print 60°C and textile print 140°C), economical and safe.

### Tf:

Like Pf, there was prepared a homogeneous solution Tf
- 68,3 weight % T
- 22,9 weight % Scent
- 8,2 weight % Ethanol (industol)
- 0,61 weight % N10PH

If necessary, ethanol content can be dropped to 5.9 weight % (lacquer comprises solvents)

Thickening of Tf solution
-Aerosil 200 viscosity does not rise; e.g. 2 weight % 53 000 mPas (25°C)
-Sylothix 51 4 weight % 40 000 mPas (25°C, forming groats)
->do not function in polar environment
-> Aerosil COK 84 silicon aluminum oxide for polar environment
-Tf thickened 3,7 weight % 130 000 mPas (25°C)

It is also notable that the scent can be managed to totally dissolve in P with a small amount of alcohol. This can be used for concentrating the scent in lacquer:
- 68,3 weight % P
- 29,3 weight % Scent (Latte)
- 2,4 weight % Ethanol

For textile lacquer was managed a concentration of scent (Latte) 40%
-60,0 weight % T
-40,0 weight % Scent (Latte)

Useful as a blend with Paper lacquer and Textile lacquer
-22,9 weight % Scent
-8,2 weight % Ethanol (industol)
-0,61 weight % N10PH

For paper lacquer:
- 68,3 weight % P

Some of ready-made mixture:
- 72,3 weight % Scent
- 25,8 weight % Ethanol
- 1,92 weight % N10PH
is admixed with paper lacquer 31,7 weight %

For textile lacquer:
- 68,3 weight % T and thickened 3,7 weight % Aerosil COK 84

Some of ready-made mixture:
- 72,3 weight % Scent
- 25,8 weight % Ethanol
- 1,92 weight % N10PH
is admixed with textile lacquer 31,7 weight % and thickened 3,7 weight % Aerosil COK84

In paper and textile lacquer the fraction of N10PH, after the evaporation of alcohol, is 0,82 weight % (initially 0,61 weight %).

### Printing and analyzing

For printing and analyzing, the following solutions were prepared (weighings in grams)

| | P1 | P2 | P3: |
|---|---|---|---|
| P (lacquer) | 102,45 | 102,45 | 102,45 |
| Latte | - | 34,35 | 34,35 |
| Industol | 12,40 | 12,30 | 12,30 |
| N10PH | 0,92 | - | 0,92 |

These were printed on April 3, 2013 with silk-screen technique (screen 60 mesh/cm², 50°C) on cardboard (coated side). The printing sequence was P1, P2 and P3. After emerging from oven, the A4 size pieces were dry and were cut for 1 cm x 4 cm strips. The strips were placed in hermetic glass flasks. Standard was the scent Latte and matrix was P1. The matrix required the use of 0,1 g more of Industol than P2 and P3 samples for the prepared mixture to be homogeneous. The number of conducted parallel determinations was two. The samples were analyzed for the releasing scent with headspace GC-MS technique over a time span of 0 to 4 weeks. The sample was heated at 30°C for the period of 10 minutes and components were conducted with a helium flow to Tenax trap. From there, the components were desorbed to a cold trap (liquid nitrogen, -120°C). The samples were kept in an odorless place at room temperature, which also had good ventilation.

The prominent aroma substances were 3-carene (conjugated six-member and three-member ring) and d-limonene (six-member ring), indane (conjugated aromatic 6-member ring and five-member ring), straight-chain aldehyde octanal and solvent 1-methoxy-2-propanol.

### Results and conclusions

The selected film forming technique is working. Recipes are homogeneous and applicable to cardboard and paper lacquer applications. The migration of molecules through the film is influenced by their structure, and therefore the precise evaporation of a scent through the film is impossible to determine. Evaporation through the film is clearly lesser than from filmless samples. As a marker, it is possible to subsequently use a known aroma compound whose retention time (location of spike) and content (surface area of spike) are readily determinable. The contamination risk should be avoided, because e.g. citrus compounds are common in various detergents, such as in hand and general washing agents. Longer assessment times are challenging because of both equipment setups and contamination.

The amount of d-limonene in the filmless sample had dropped in 2 weeks to 0.51% while its content in the film-equipped sample were 20.8%. Thus, the relative deceleration of diffusion rate achieved by the film is 86% (week 0) and 79% (week 2). It should be noted that every substance also has its specific odor threshold. In the case of d-limonene, it is 200 ppb.
Diffusion rate of 3-carene decelerated 51 % (week 0)
Diffusion rate of indane decelerated 32% (week 0)
Diffusion rate of octanal decelerated 36% (week 0)
Diffusion rate of solvent decelerated 43% (week 0 and week 2)

Diffusion rate can be further decelerated by increasing film thickness. The study provides a good basis for optimizing the amount of film former by means of a marker.

Obtained is a product/matrix, which is
- standardized
- applicable to various scents
- applicable to various printing techniques
- sellable commercially and with product safety

### Combining offset lacquer and scent

It was examined whether results obtained from the paper and textile lacquers' scent project (May 27, 2013) can be applied also to offset printing technique.

Employed chemicals
Offset (O-lacquer) Novacoat 4060 (FlintGroup)
Scents Parfum Apple (Holland Aromatics)
Film former Aqualon EC N10 (Hercules, pharm. grade)

### Measuring equipment

Measuring devices, water baths and buffer solutions had been calibrated and were subject to quality control:
- Brookfield Model DV-II+ Viscometer
- temperature controlled water bath Julabo
- pH meter Phenomenal VWR
- buffer solutions pH 4.7 and 11 AVS Titrinorm BDH Prolabo

### General

-O is an oil-based lacquer, comprising 10-20% light paraffinic solvents
-as a catalyst, the lacquer further comprises cobalt-2-ethylhexacyanate
-O dries by way of oxidation reaction
-O kinematic viscosity is 7 cSt (40°C)

### Results

For offset lacquer there was managed a concentration of scent 56 weight % without alcohol. Textile and Offset lacquers comprise solvents, which enables the scent to dissolve directly in the lacquer.

Dynamic viscosities (mPas, 25°C) and pH value
- O: 56 000 mPas / pH value 6,0
- mixture: 25 500 mPas / pH value 6,2
- 68,3 weight %
- 22,9 weight % Scent
- 8,2 weight % Ethanol
- 0,61 weight % N10PH

There was prepared a mixture
-22,9 weight % Scent
-8,2 weight % Ethanol
-0,61 weight % N10PH

This was admixed with Offset lacquer
- 68,3 weight %
I.e. some of ready-made mixture:
-72,3 weight % Scent
-25,8 weight % Ethanol
-1,92 weight % N10PH
is admixed with Offset lacquer 31,7 weight %

In Offset lacquer the fraction of N10PH, after the evaporation of alcohol, is 0,82 weight % (initially 0,61 weight %). The mixture is totally homogeneous. The matrices of paper, textile and Offset lacquer are applicable uniformly.

### Flavoring

The flavoring of alcohol (Tapio Vodka) with a flavor strip printed by using smell me technology => functions exactly the same also with water (also mineral waters).
* strip substrate 0,6mm, absorbent cardboard, food grade
* strip printed on both sides of the product
* printing solution composition: 27,7% matrix (smell me solution), 72,3% flavor raw material and this supplemented with 3,7% (weight percent) of a viscosity riser chemical

* printing technique screen printing
* The liquid (Vodka) becomes flavored in 2 minutes => taste changes from bitter, ethanol-like to very pleasant. In this test, the flavor was menthol, which could be tasted quite clearly from the liquid after flavoring. (an alternative way could be offset printing technology, wherein a 10-color anicolor machine could be used for printing from 5 units onto one side of the substrate and, after turning the sheet with the anicolor machine, the other side is also printed with a flavor from 5 units. This process may also be applicable for producing the discussed product e.g. alongside/instead of screen printing technology.

External tobacco flavoring strips:
* strip substrate 0,6mm, absorbent cardboard, food grade
* strip printed on both sides of the product
* printing solution composition: 27,7% matrix (smell me solution), 72,3% flavor raw material and this supplemented with 3,7% (weight percent) of a viscosity riser chemical
* printing technique screen printing
* Tests have been conducted by using a flavor raw material comprising two different carriers. In practice, the carrier raw materials were alcohol or ethereal oil. A practical difference between these two flavor raw materials regarding use of the product was the fact that the alcohol-based raw material required about an hour to become absorbed in the product while the product prepared with ethereal oil flavored tobacco in 10 minutes. Another difference between these two flavor raw materials is the fact that tobacco flavored with an alcohol-based strip has a taste which is "fresher" than that flavored with ethereal oil. This is due to the fact that ethereal oil can be tasted from tobacco when smoking while tobacco flavored with an alcohol-based strip is fresher and the taste involves just the "flavor" and in this test menthol. In the menthol version, the ethereal oil is tasted more easily than for example in an apple-flavored version, which is even by nature a slightly sweet flavor (an alternative way could be offset printing technology, wherein a 10-color anicolor machine could be used for printing from 5 units onto one side of the substrate and, after turning the sheet with the anicolor machine, the other side is also printed with a flavor from 5 units. This process may also be applicable for producing the discussed product e.g. alongside/instead of screen printing technology.

### Flavoring of tea and coffee

* strip substrate 0,6mm, absorbent cardboard, food grade
* strip printed on both sides of the product
* printing solution composition: 27,7% matrix (smell me solution), 72,3% flavor raw material and this supplemented with 3,7% (weight percent) of a viscosity riser chemical
* printing technique screen printing
* The strip was placed within tea/coffee. Tea/coffee becomes flavored in a few hours after which the beverage prepared from tea/coffee has a taste consistent with the strip flavor.

## Claims

1. A functional compound-comprising product, **characterized in that** said product comprises a mass provided with a functional compound that comprises at least one flavour, a solvent comprising ethanol, wherein the solvent is capable of dissolving the functional compound, a viscosity regulator comprising a silicate, and a carrier matrix having a film former comprising ethyl cellulose, the said product further comprising a base material comprising paper or textile, wherein the mass has been printed or dosed on the base material and forms a permeable film thereon, and wherein the film former in the matrix has a content of less than 2% by weight.

2. A functional compound-comprising product according to claim 1, **characterized in that** the film former in the matrix has a content of less than 1% by weight.

3. A functional compound-comprising product according to any one of the preceding claims, **characterized in that** the mass is of food grade quality.

4. A functional compound-comprising product according to any one of the preceding claims, **characterized in that** the base material is cardboard.

5. A functional compound-comprising product according to claims 1-3, **characterized in that** the base material is paperboard.

6. A functional compound-comprising product according to any one of the preceding claims, **characterized in that** the base material is classified as of food grade quality.

7. A method for manufacturing a functional compound-comprising product, **characterized by** the steps of:
- providing a mass provided with a functional compound that comprises at least one flavour, a solvent comprising ethanol, wherein the solvent is capable of dissolving the functional compound, a viscosity regulator comprising a silicate, and a carrier matrix having a film former comprising ethyl cellulose, wherein the film former in the matrix has a content of less than 2% by weight;
- providing a base material comprising textile or paper; and
- printing or dosing said mass on said base material
- forming a permeable film on the base material.

8. A method according to claim 7, **characterized in that** the mass is of food grade quality.

9. A method according to claims 7-8, **characterized in that** the film former in the matrix has a content of less than 1 % by weight.

10. A method according to claims 7-9, **characterized in that** the base material is cardboard.

11. A method according to claims 7-9, **characterized in that** the base material is paperboard.

12. A method according claims 7-11, **characterized in that** the base material is classified as of food grade quality.

## Patentansprüche

1. Eine funktionale Verbindung enthaltendes Produkt, **gekennzeichnet dadurch, dass** das Produkt eine Masse umfasst, die mit einer funktionalen Verbindung, die mindestens ein Aroma umfasst, einem Ethanol umfassenden Lösungsmittel, wobei das Lösungsmittel in der Lage ist, die funktionale Verbindung zu lösen, einem ein Silikat umfassenden Viskositätsregler, und einer Trägermatrix, die einen Ethylcellulose umfassenden Filmbildner aufweist, versehen ist, wobei das Produkt ferner ein Grundmaterial umfasst, das Papier oder Textil umfasst, wobei die Masse auf dem Grundmaterial aufgedruckt oder aufdosiert wurde und auf diesem einen durchlässigen Film bildet, und wobei der Filmbildner in der Matrix einen Gehalt von weniger als 2 Gew.-% aufweist.

2. Eine funktionale Verbindung enthaltendes Produkt nach Anspruch 1, **gekennzeichnet dadurch, dass** der Filmbildner in der Matrix einen Gehalt von weniger als 1 Gew.-% aufweist.

3. Eine funktionale Verbindung enthaltendes Produkt nach einem der vorhergehenden Ansprüche, **gekennzeichnet dadurch, dass** die Masse Lebensmittelqualität aufweist.

4. Eine funktionale Verbindung enthaltendes Produkt nach einem der vorhergehenden Ansprüche, **gekennzeichnet dadurch, dass** es sich beim Grundmaterial um Karton handelt.

5. Eine funktionale Verbindung enthaltendes Produkt nach Anspruch 1 bis 3, **gekennzeichnet dadurch, dass** es sich beim Grundmaterial um Pappe handelt.

6. Eine funktionale Verbindung enthaltendes Produkt nach einem der vorhergehenden Ansprüche, **gekennzeichnet dadurch, dass** das Grundmaterial als Lebensmittelqualität eingestuft ist.

7. Verfahren zur Herstellung eines eine funktionale Verbindung enthaltenden Produkts, **gekennzeichnet durch** die Schritte:
- Bereitstellen einer Masse, die mit einer funktionalen Verbindung, die mindestens ein Aroma umfasst, einem Ethanol umfassenden Lösungsmittel, wobei das Lösungsmittel in der Lage ist, die funktionale Verbindung zu lösen, einem ein Silikat umfassenden Viskositätsregler, und einer Trägermatrix, die einen Ethylcellulose umfassenden Filmbildner aufweist, versehen ist, wobei der Filmbildner in der Matrix einen Gehalt von weniger als 2 Gew.-% aufweist;
- Bereitstellen eines Grundmaterials, das Textil oder Papier umfasst; und
- Aufdrucken oder Aufdosieren der Masse auf dem Grundmaterial
- Ausbilden eines durchlässigen Films auf dem Grundmaterial.

8. Verfahren nach Anspruch 7, **gekennzeichnet dadurch, dass** die Masse Lebensmittelqualität aufweist.

9. Verfahren nach Anspruch 7 bis 8, **gekennzeichnet dadurch, dass** der Filmbildner in der Matrix einen Gehalt von weniger als 1 Gew.-% aufweist.

10. Verfahren nach Anspruch 7 bis 9, **gekennzeichnet dadurch, dass** es sich beim Grundmaterial um Karton handelt.

11. Verfahren nach Anspruch 7 bis 9, **gekennzeichnet dadurch, dass** es sich beim Grundmaterial um Pappe handelt.

12. Verfahren nach Anspruch 7 bis 11, **gekennzeichnet dadurch, dass** das Grundmaterial als Lebensmittelqualität eingestuft ist.

## Revendications

1. Produit comprenant un composé fonctionnel, **caractérisé en ce que** ledit produit comprend une masse pourvue d'un composé fonctionnel qui comprend au moins un arôme, d'un solvant comprenant de l'éthanol, ledit solvant étant capable de dissoudre le composé fonctionnel, d'un régulateur de viscosité comprenant un silicate, et d'une matrice de support comportant un agent filmogène comprenant de l'éthylcellulose, ledit produit comprenant également un matériau de base comprenant un papier ou textile, ladite masse ayant été imprimée ou dosée sur le matériau de base et formant un film perméable sur celui-ci, et ledit agent filmogène dans la matrice présentant une teneur de moins de 2 % en poids.

2. Produit comprenant un composé fonctionnel selon la revendication 1, **caractérisé en ce que** l'agent filmogène dans la matrice présente une teneur de moins de 1 % en poids.

3. Produit comprenant un composé fonctionnel selon l'une des revendications précédentes, **caractérisé en ce que** la masse est de qualité alimentaire.

4. Produit comprenant un composé fonctionnel selon l'une des revendications précédentes, **caractérisé en ce que** le matériau de base est du papier-carton.

5. Produit comprenant un composé fonctionnel selon les revendications 1 à 3, **caractérisé en ce que** le matériau de base est du carton.

6. Produit comprenant un composé fonctionnel selon l'une des revendications précédentes, **caractérisé en ce que** le matériau de base est classifié de qualité alimentaire.

7. Procédé de fabrication d'un produit comprenant un composé fonctionnel, **caractérisé par** les étapes consistant à:
- fournir une masse pourvue d'un composé fonctionnel qui comprend au moins un arôme, d'un solvant comprenant de l'éthanol, ledit solvant étant capable de dissoudre le composé fonctionnel, d'un régulateur de viscosité comprenant un silicate, et d'une matrice de support comportant un agent filmogène comprenant de l'éthylcellulose, ledit agent filmogène dans la matrice présentant une teneur de moins de 2 % en poids ;
- fournir un matériau de base comprenant un textile ou papier ; et
- imprimer ou doser ladite masse sur ledit matériau de base
- former un film perméable sur le matériau de base.

8. Procédé selon la revendication 7, **caractérisé en ce que** la masse est de qualité alimentaire.

9. Procédé selon les revendications 7 à 8, **caractérisé en ce que** l'agent filmogène dans la matrice présente une teneur de moins de 1 % en poids.

10. Procédé selon les revendications 7 à 9, **caractérisé en ce que** le matériau de base est du papier-carton.

11. Procédé selon les revendications 7 à 9, **caractérisé en ce que** le matériau de base est du carton.

12. Procédé selon les revendications 7 à 11, **caractérisé en ce que** le matériau de base est classifié de qualité alimentaire.
